# EUROPÄISCHE PATENTSCHRIFT

(11) **EP 3 271 573 B1**
(45) Veröffentlichungstag und Bekanntmachung des Hinweises auf die Patenterteilung: **11.12.2019**
(21) Anmeldenummer: 17727092.3
(22) Anmeldetag: 03.04.2017
(51) Int. Cl.: F03B 17/00, F03G 3/00, H02J 15/00, F15B 1/04, F03B 13/06

(54) **ZYLINDER-KOLBEN-ANORDNUNG FÜR EINE VORRICHTUNG ZUM SPEICHERN VON ENERGIE SOWIE EINE VORRICHTUNG ZUM SPEICHERN VON ENERGIE**
CYLINDER-PISTON ARRANGEMENT FOR A DEVICE FOR STORING ENERGY, AND DEVICE FOR STORING ENERGY
ENSEMBLE CYLINDRE-PISTON D'UN DISPOSITIF D'ACCUMULATION D'ÉNERGIE ET DISPOSITIF D'ACCUMULATION D'ÉNERGIE

(30) Priorität: 07.04.2016 DE 102016205857
(43) Veröffentlichungstag der Anmeldung: 24.01.2018
(73) Patentinhaber: Delta Energy GmbH&Co. KG 1, 69115 Heidelberg (DE)
(72) Erfinder: PONGRATZ, Stefan, 84130 Dingolfing (DE)
(74) Vertreter: Patent- und Rechtsanwälte Ullrich & Naumann
(86) Internationale Anmeldenummer: PCT/DE2017/200030
(87) Internationale Veröffentlichungsnummer: WO 2017/174082

(56) Entgegenhaltungen:
- CN-A- 102 705 141
- DE-A1-102005 028 281
- DE-A1-102010 034 757
- FR-A- 372 435
- FR-A1- 2 386 709
- GB-A- 2 259 117
- US-A- 5 499 889
- US-A1- 2014 084 597

## Beschreibung

Die vorliegende Erfindung betrifft eine Zylinder-Kolben-Anordnung für eine Vorrichtung zum Speichern von Energie sowie eine solche Vorrichtung.

Aus der Praxis sind sogenannte Pumpspeicherkraftwerke seit Jahren bekannt. Diese dienen zur Zwischenspeicherung von elektrischer Energie, bspw. wenn aufgrund einer zu geringen Nachfrage ein Überangebot an elektrischer Leistung im Stromnetz besteht. Die durch das Pumpspeicherkraftwerk gespeicherte Energie kann in Zeiten erhöhter Nachfrage in das Stromnetz zurück gespeist werden, um somit Nachfragespitzen abzufangen.

Die Funktion eines Pumpspeicherkraftwerks beruht auf der Umwandlung von elektrischer Energie in potentielle Energie von Wasser, indem das Wasser von einem Tiefbecken in ein höher liegendes Speicherbecken herauf gepumpt und somit die potentielle Energie des Wassers erhöht wird. Zur Umwandlung der potentiellen Energie des Wassers in elektrische Energie wird das Wasser von dem Speicherbecken in das tiefer gelegene Tiefbecken abgelassen und treibt dabei eine Turbine an, mittels welcher elektrische Leistung erzeugbar ist. Der Wirkungsgrad eines Pumpspeicherkraftwerks liegt bei ca. 75% bis 80%.

Ein weiteres Beispiel für eine Vorrichtung zur Speicherung von Energie ist aus der Patentschrift DE 10 2010 034 757 bekannt.

Bei den bekannten Vorrichtungen zur Speicherung von Energie ist problematisch, dass diese mit einem erheblichen Eingriff in die Umwelt einhergehen. Dies liegt insbesondere daran, dass eine große Menge Wasser zur Speicherung von ausreichend potentieller Energie notwendig ist, so dass die hierzu benötigten Speicherbecken entsprechend groß dimensioniert sein müssen. Auch sind die Speicherbecken in der Regel betoniert, so dass die Ausbildung eines natürlichen Bewuchses und somit eines Biotops nicht möglich ist. Des Weiteren ist problematisch, dass Pumpspeicherkraftwerke nur in Gebieten errichtet werden können, welche die benötigte Topologie, nämlich ein entsprechendes Gefälle zwischen Tiefbecken und Speicherbecken aufweisen.

Der vorliegenden Erfindung liegt daher die Aufgabe zugrunde, eine Einrichtung anzugeben, bei der mit konstruktiv einfachen Mitteln die potentielle Energie einer Masse veränderbar ist. Des Weiteren soll eine entsprechende Vorrichtung zum Speichern von Energie angegeben werden.

Erfindungsgemäß wird die voranstehende Aufgabe durch die Merkmale des Anspruchs 1 gelöst. Damit ist eine Zylinder-Kolben-Anordnung für eine Vorrichtung zum Speichern von Energie, mit einem im Wesentlichen vertikal angeordneten Zylinder und einem eine zu hebende Masse darstellenden Kolben, angegeben, wobei unterhalb eines Zylinderbodens ein Aufnahmebereich für eine Flüssigkeit ausgebildet ist und wobei der Zylinderboden mehrere Durchgänge aufweist, so dass Flüssigkeit von dem Aufnahmebereich in den Zylinder unterhalb des Kolbens förderbar ist, um die potentielle Energie der Kolbenmasse durch ein Anheben des Kolben zu erhöhen.

In erfindungsgemäßer Weise ist dabei erkannt worden, dass die zugrundeliegende Aufgabe durch eine geschickte Ausgestaltung einer Zylinder-Kolben-Anordnung in überraschend einfacher Weise gelöst werden kann. Dazu ist ein vorzugsweise vertikal angeordneter Zylinder vorgesehen, in dem ein Kolben angeordnet ist, der die zu hebende Masse darstellt. Unterhalb des Zylinderbodens ist ein Aufnahmebereich für Flüssigkeit vorgesehen. Die Flüssigkeit ist von dem Aufnahmebereich über die in dem Zylinderboden angeordnete Durchgänge in den Zylinder unterhalb des Kolbens förderbar, um den Kolben zur Erhöhung der potentiellen Energie anzuheben. Aufgrund der Durchgänge in dem Zylinderboden ist mit konstruktiv einfachen Mitteln ein Strömungspfad definiert, der gewährleistet, dass eine ausreichende Menge von Flüssigkeit in einem definierten Zeitraum und unter einem definierten Druck in den Zylinder einbringbar ist.

Insbesondere ist denkbar, dass der Kolben in seiner Grundposition auf dem Zylinderboden aufliegt. Dabei bieten die Durchgänge der Flüssigkeit eine große Fläche, um auf den Kolben einzuwirken, so dass ein relativ geringer Druck ausreicht, um den Kolben aus der Grundposition heraus anzuheben. Somit werden Druckspitzen, welche beim Anheben des Kolbens bei einer solchen Grundposition auftreten, effektiv vermindert.

In vorteilhafter Weise kann 60% bis 80%, insbesondere 65% bis 75%, vorzugsweise 70%, der Fläche des Zylinderbodens mit Durchgängen versehen sein. Dadurch ist ein optimaler Strömungspfad für die Flüssigkeit definiert.

In erfindungsgemäßer Weise ist der Aufnahmebereich schalenförmig, insbesondere als Abschnitt bzw. Kappe eines Ellipsoids oder einer Hohlkugel, ausgebildet. Bei einer solchen Ausgestaltung definieren der Aufnahmebereich und der Zylinderboden ein Druckgehäuse, wobei der Zylinderboden als Gehäusedeckel wirkt. Somit ist zunächst der schalenförmige Bereich mit Flüssigkeit befüllbar, wobei die Durchgänge des Zylinderbodens in idealer Weise einen Strömungspfad zwischen dem Aufnahmebereich und dem Zylinder definieren.

Zur Realisierung einer ausreichend stabilen Konstruktion kann zumindest ein sich von dem Aufnahmebereich zu dem Zylinderboden erstreckendes Stützelement angeordnet sein. Weiterhin ist denkbar, dass mehrere Stützelemente vorgesehen sind. Im Konkreten kann das Stützelement bzw. können die Stützelemente als Stützwand und/oder Stützstrebe realisiert sein.

Um zu gewährleisten, dass der insbesondere schalenförmig ausgebildete Aufnahmebereich insgesamt mit Flüssigkeit befüllbar ist, kann an dem Stützelement bzw. an den Stützelementen zumindest jeweils ein Durchgang ausgebildet sein. Der Durchgang kann dabei kreisförmig, ellipsenförmig und/oder bogenförmig realisiert sein. Eine bogenförmige Ausgestaltung der Durchgänge hat den Vorteil, dass die Stützelemente äußerst Stabil realisiert sind.

Damit nicht ausschließlich potentielle Energie, sondern auch thermischer Energie speicherbar ist, kann an dem Aufnahmebereich und/oder an dem Zylinderboden eine Heizeinrichtung ausgebildet sein. Bei der Heizeinrichtung kann es sich um einen Wärmetauscher handeln, beispielsweise um eine Leitung, die mit einer erwärmten Flüssigkeit beaufschlagbar ist. Des Weiteren ist denkbar, dass die Heizeinrichtung als Heizwendel ausgestaltet ist.

Zur Vereinfachung der Wartungsarbeiten kann an dem Aufnahmebereich und/oder an dem Zylinderboden eine verschließbare Revisionsöffnung ausgebildet sein. Die Revisionsöffnung kann beispielsweise als Mannloch realisiert sein.

In vorteilhafter Weise sind der Aufnahmebereich und der Zylinderboden aus Metall oder einer Metalllegierung, beispielsweise aus Stahl, hergestellt. Dadurch ist die Vorrichtung einfach zu fertigen und weist eine hohe Stabilität auf. Auch können der Aufnahmebereich und der Zylinderboden einteilig ausgebildet sein.

Des Weiteren ist denkbar, dass an dem Aufnahmebereich ein einzelner Zu-/Ablauf für Flüssigkeit vorgesehen ist. Alternativ können ein separater Zulauf und ein separater Ablauf vorgesehen sein, so dass eine entsprechend realisierte Anordnung nach dem Prinzip des hydraulischen Kurzschlusses betreibbar ist.

Erfindungsgemäß wird die zugrundeliegende Aufgabe des Weiteren durch die Merkmale des nebengeordneten Anspruches 11 gelöst. Danach umfasst eine Vorrichtung zum Speichern von Energie eine Zylinder-Kolben-Einheit nach einem der Ansprüche 1 bis 10, wobei von einer Pumpeinrichtung Flüssigkeit in den Aufnahmebereich förderbar ist, um die potentielle Energie der Kolbenmasse durch Anheben des Kolbens zu erhöhen, wobei eine Wandlereinrichtung angeordnet ist und wobei der Wandlereinrichtung bei einem Absenken des Kolbens die im Zylinder befindliche Flüssigkeit zuführbar ist, um zumindest einen Teil der potentiellen Energie der Kolbenmasse in elektrische Energie umzuwandeln.

Dabei kann die Zylinder-Kolben-Anordnung voranstehend beschriebenen Merkmale und Vorteile aufweisen.

In erfindungsgemäßer Weise ist zunächst erkannt worden, dass die zugrundeliegende Aufgabe durch die geschickte Ausgestaltung einer vorzugsweise vertikal angeordneten Zylinder-Kolben-Anordnung in verblüffend einfacher Weise gelöst werden kann. Dabei ist von einer Pumpeinrichtung eine Flüssigkeit - bspw. Wasser oder ein Öl - unterhalb des Kolbens in den Zylinder einbringbar, wobei der Kolben die zu hebende Masse darstellt. Durch das Anheben des Kolbens erhöht sich die potentielle Energie der Kolbenmasse, was zur Energiespeicherung genutzt wird. Folglich wird in raffinierter Weise die Kolbenmasse genutzt, um die elektrische Energie als potentielle Energie zu speichern. In weiter erfindungsgemäßer Weise ist dabei erkannt worden, dass die gesamte Vorrichtung extrem klein baut, wenn der Kolben aus einem Material mit einer hohen Dichte hergestellt ist, da nämlich die potentielle Energie proportional zu der angehobenen Masse ist, so dass bereits bei einem relativ geringer Höhenunterschied ausreichend potentielle Energie der Kolbenmasse vorliegt. Es ist somit insbesondere möglich, zumindest den Zylinder unterirdisch anzuordnen, um Eingriffe in die Landschaft auf ein Mindestmaß zu reduzieren. Des Weiteren ist die benötigte Flüssigkeitsmenge gering, so dass das Flüssigkeitsreservoir relativ klein dimensioniert sein kann.

In vorteilhafter Weise besteht der Kolben zumindest teilweise aus einem Abfallstoff bzw. Recyclingstoff. Der Abfallstoff kann dabei mit einem Bindemittel versetzt sein. In idealer Weise kann es sich bei dem Abfallstoff um Schlacke, insbesondere um Stahlschlacke, handeln. Diese kann mit einem Bindemittel versetzt werden und weist sodann eine Dichte von ca. 5000 kg/m³ auf, was in etwa dem Fünffachen der Dichte von Wasser (ca. 1.000 kg/m³) entspricht. Neben der hohen Dichte hat die Schlacke den weiteren Vorteil, dass diese als Abfallstoff preiswert ist und somit die gesamte Vorrichtung günstig in der Herstellung ist.

Um die Konstruktion und somit den Aufbau der Vorrichtung möglichst einfach auszugestalten, kann der Kolben mehrere übereinander angeordnete Segmente aufweisen. Die Segmente können scheibenförmig, insbesondere rund, viereckig, fünfeckig, sechseckig etc., ausgebildet sein. Beispielsweise können die Segmente auch die Form eines Kreisausschnittes, insbesondere eines Halbkreises, aufweisen. In vorteilhafter Weise sind die Segmente voneinander abnehmbar. Dabei ist denkbar, dass die Segmente miteinander korrespondierende Ausnehmungen und Erhebungen aufweisen, so dass die Segmente definiert und sicher aufeinander stapelbar sind. Im Konkreten können die Segmente einen Radius von 5 m bis 25 m, vorzugsweise von 10 m, und/oder jeweils ein Gewicht von 40 t bis 60 t, vorzugsweise von 50 t, aufweisen. Durch die segmentierte Ausgestaltung der Kolbenmasse kann die Vorrichtung mit relativ geringem Aufwand errichtet und gewartet werden.

Um die Handhabung der Segmente zu vereinfachen, können Kopplungsmittel für eine Abhebeeinrichtung - bspw. für einen Kran - ausgebildet sein. Die Kopplungsmittel können insbesondere als mit einem Zapfen versehene kugelförmige Elemente realisiert sein. In vorteilhafter Weise sind an einem Segment mehrere Kopplungsmittel vorgesehen, bspw. mittig sowie in Umfangsrichtung in gleichen Abständen versetzt zueinander im Randbereich der Segmente.

In besonders vorteilhafter Weise können die Segmente in einer Aufnahmeeinrichtung angeordnet sein. Die Aufnahmeeinrichtung kann aus Metall oder einer Metalllegierung, insbesondere aus Stahl, hergestellt sein und/oder als Hohlzylinder realisiert sein, wobei eine Grundfläche des Hohlzylinders geschlossen ausgebildet sein kann. Weiterhin können in und/oder an der Aufnahmeeinrichtung Führungselemente vorgesehen sein, wobei die Führungselemente in korrespondierende Materialausnehmungen der Segmente eingreifen. Dadurch ist ein Verrutschen der Segmente innerhalt der Aufnahmeeinrichtung in effektiver Weise vermieden.

Des Weiteren ist denkbar, dass zwischen dem Zylinder und der Pumpeinrichtung eine erste Leitung realisiert ist und dass zwischen Zylinder und Wandlereinrichtung eine zweite Leitung angeordnet ist. In bevorzugter Weise können die separaten Leitungen miteinander - mittelbar oder unmittelbar - kommunizieren, so dass die Vorrichtung nach dem Prinzip des hydraulischen Kurzschlusses betreibbar ist. Des Weiteren ist denkbar, dass die Pumpeinrichtung und die Wandlereinrichtung über die gleiche Leitung mit dem Zylinder verbunden sind. Bei den voranstehend genannten Leitungen kann es sich bspw. um Druckrohrleitungen handeln.

Alternativ oder zusätzlich zur Einspeisung von elektrischer Energie über ein Stromnetz kann zumindest eine Anlage zur Energiegewinnung angeordnet sein, um die Pumpeinrichtung mit Energie zu versorgen. Dabei kann es sich insbesondere um ein Blockheizkraftwerk, eine Solarstromanlage und/oder eine Windkraftanlage handeln. Die Anordnung eines Blockheizkraftwerks hat den weiteren Vorteil, dass die Flüssigkeit über die Abwärme des Blockheizkraftwerks erwärmbar ist, so dass neben der potentiellen Energie der Kolbenmasse auch die thermische Energie der Flüssigkeit als "Energiespeicher" verwendbar ist. Insbesondere ist denkbar, dass die Flüssigkeit bspw. über einen Wärmetauscher erhitzbar sein kann.

Eine besonders einfache Realisierung des Zylinders ist möglich, wenn dieser aus Metall oder einer Metalllegierung besteht. Dabei kann es sich in bevorzugter Weise um Stahl handeln. Zur Gewährleistung der benötigten Stabilität der Konstruktion kann der Metallzylinder zumindest teilweise mit Beton ummantelt sein. In idealer Weise kann der Metallzylinder über seine gesamte Länge hinweg mit Beton ummantelt sein. Alternativ oder zusätzlich kann die Betonummantelung am unteren Ende des Zylinders in eine zumindest nahezu horizontal verlaufende Betonplatte übergehen, insbesondere einteilig mit dieser ausgestaltet sein.

In weiter vorteilhafter Weise kann ein System aus mehreren erfindungsgemäßen Vorrichtungen realisiert sein. Insbesondere kann ein redundantes Mehrfachsystem realisiert werden, so dass bei einer Wartung oder einem Defekt an einem der Bestandteile einer der Vorrichtungen die übrigen Vorrichtungen den Ausfall kompensieren.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen, perspektivischen Darstellung ein Ausführungsbeispiel einer erfindungsgemäßen Vorrichtung,
- Fig. 2: in einer schematischen, geschnittenen Darstellung einen vergrößerten Ausschnitt des Ausführungsbeispiels gemäß Fig. 1,
- Fig. 3: in einer schematischen, geschnittenen Darstellung einen vergrößerten Ausschnitt des Ausführungsbeispiels gemäß Fig. 1,
- Fig. 4: in einer schematischen, perspektivischen Darstellung einen Zylinder einer erfindungsgemäßen Vorrichtung,
- Fig. 5: in einer schematischen, perspektivischen Darstellung einen Kolben einer erfindungsgemäßen Vorrichtung,
- Fig. 6: in einer schematischen, geschnittenen Darstellung den Kolben gemäß Fig. 5,
- Fig. 7: in einer schematischen, geschnittenen Darstellung die Aufnahmeeinrichtung des Kolbens gemäß Fig. 5,
- Fig. 8: in einer schematischen, perspektivischen Darstellung ein Segment des Kolbens einer erfindungsgemäßen Vorrichtung,
- Fig. 9: in einer schematischen, perspektivischen Darstellung den Zylinderboden einer erfindungsgemäßen Vorrichtung,
- Fig. 10: in einer schematischen, geschnittenen Darstellung den Zylinderboden gemäß Fig. 10 und
- Fig. 11: in einer weiteren schematischen, geschnittenen Darstellung den Zylinderboden gemäß Fig. 10.

An dieser Stelle sei zunächst darauf hingewiesen, dass zur besseren Darstellung in einzelnen Figuren mehrfach vorhandene Elemente - bspw. Segmente, Durchgänge etc. - teilweise nicht mit einem Bezugszeichen versehen sind.

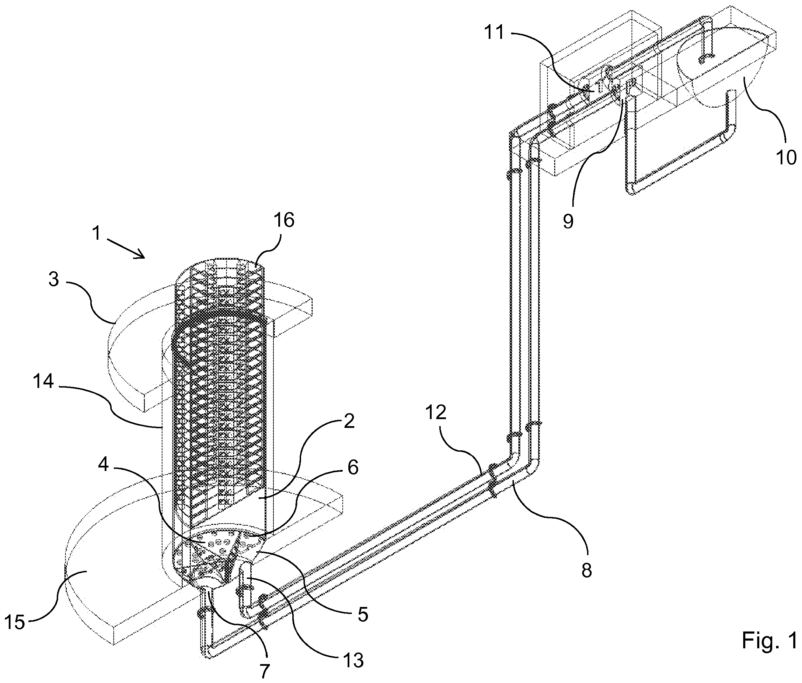

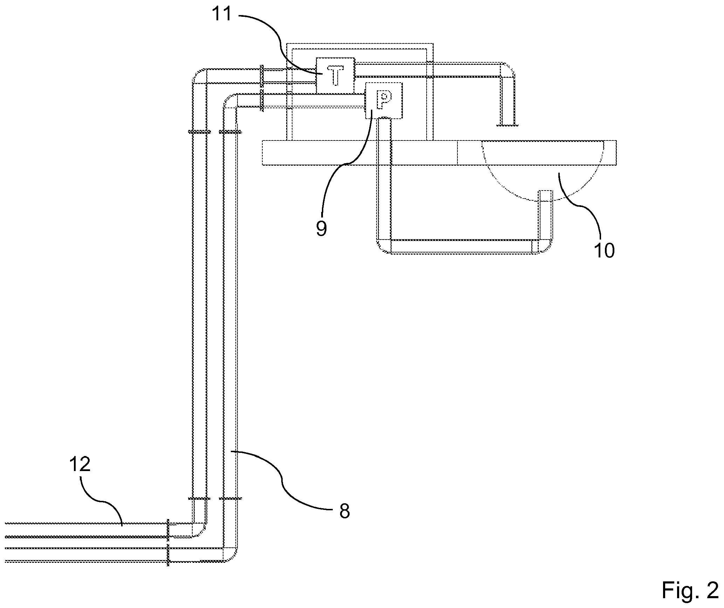

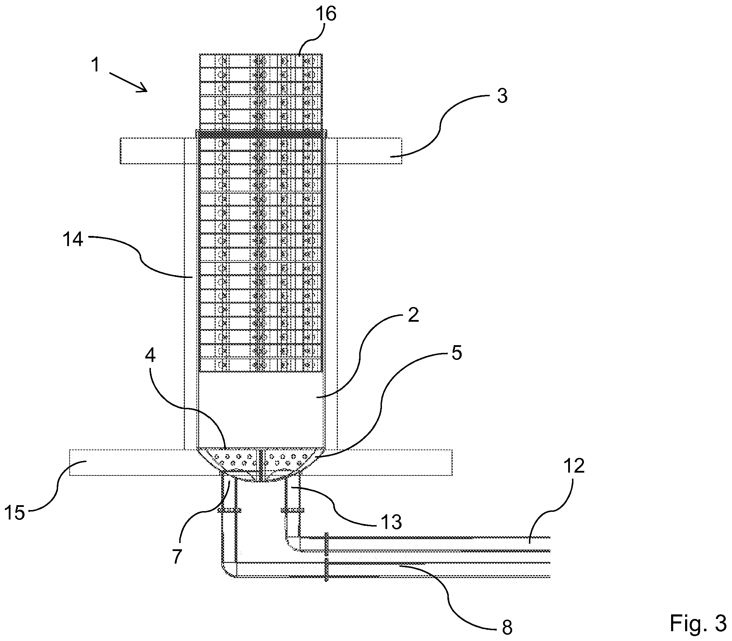

Die Figuren 1 bis 3 zeigen in verschiedenen, schematischen Darstellungen ein Ausführungsbeispiel einer erfindungsgemäßen Vorrichtung zum Speichern von Energie. Die Vorrichtung umfasst einen Kolben 1, der innerhalb eines vertikal angeordneten Zylinders 2 vorgesehen ist. Der Zylinder 2 ist in diesem Ausführungsbeispiel unterhalb der Erdoberfläche 3 realisiert und weist einen Zylinderboden 4 auf. Unterhalb des Zylinderbodens 4 ist ein Aufnahmebereich 5 vorgesehen. Des Weiteren sind in dem Zylinderboden 4 mehrere Durchgänge 6 ausgebildet, so dass eine Flüssigkeit von dem Aufnahmebereich 5 über die Durchgänge 6 in den Zylinder 2 unterhalb des Kolbens 1 förderbar ist. Somit ist der Kolben 1 anhebbar, nämlich zur Erhöhung der potentiellen Energie der Kolbenmasse.

Im hier dargestellten Ausführungsbeispiel ist der Aufnahmebereich 5 schalenförmig ausgebildet und wirkt der Zylinderboden 4 als Deckel für den Aufnahmebereich 5.

An dem Aufnahmebereich 5 ist weiterhin ein Zulauf 7 vorgesehen, der über eine erste Leitung 8 mit einer Pumpeinrichtung 9 verbunden ist. Die erste Leitung 8 bzw. der Zulauf 7 sind über ein nicht dargestelltes Ventil verschließbar. Über die Pumpeinrichtung 9 kann dem Aufnahmebereich 5 und somit auch dem Zylinder 2 aus einem Reservoir 10 eine Flüssigkeit - bspw. Wasser oder ein Öl - zugeführt werden.

Des Weiteren ist eine Wandlereinrichtung 11 über eine zweite Leitung 12 mit einem Ablauf 13 des Aufnahmebereichs 5 verbunden. Die zweite Leitung 12 kann ebenfalls über ein nicht dargestelltes Ventil verschlossen werden.

Um elektrische Energie zu speichern wird der Pumpeinrichtung 9 die zu speichernden elektrische Energie zur Verfügung gestellt und somit Flüssigkeit aus dem Reservoir 10 über die erste Leitung 8 in den Aufnahmebereich 5 eingebracht. Von dem Aufnahmebereich 5 strömt die Flüssigkeit über die Durchgänge 6 unterhalb des Kolbens 1 in den Zylinder 2. Die zweite Leitung 12 ist dabei verschlossen, so dass der Kolben 1 durch die einströmende Flüssigkeit angehoben wird und sich die potentielle Energie der Kolbenmasse proportional zu der Höhendifferenz erhöht. Sobald der Kolben 1 die gewünschte Höhe erreicht hat, kann die erste Leitung 8 mittels eines Ventils verschlossen werden. Um die potentielle Energie der Kolbenmasse wieder in elektrische Energie zu überführen, wird die zweite Leitung 12 geöffnet, so dass sich der Kolben 1 absenkt und die Flüssigkeit über die zweite Leitung 12 zu der Wandlereinrichtung 11 - beispielsweise eine Turbine - presst. Über die Flüssigkeit wird die Wandlereinrichtung 11 angetrieben und erzeugt elektrische Energie, die dem Netz oder einem Verbraucher zur Verfügung gestellt werden kann.

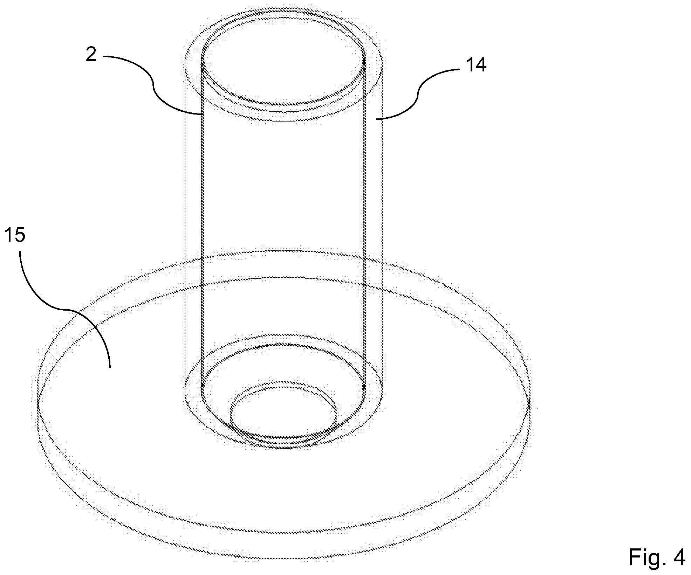

Figur 4 zeigt in einer schematischen, perspektivischen Darstellung einen Zylinder 2 einer erfindungsgemäßen Vorrichtung. Der Zylinder 2 ist insbesondere aus Stahl hergestellt und über seine gesamte Länge hinweg mit einer Betonummantelung 14 versehen. Am unteren Ende des Zylinders 2 geht die Betonummantelung 14 in eine (Beton-)Platte 15 über, so dass der Zylinder 2 sicher fixiert ist. Des Weiteren läuft die Betonummantelung 14 unterhalb des Zylinders 2 konisch zu, um nämlich den schalenförmigen Aufnahmebereich 5 aufzunehmen.

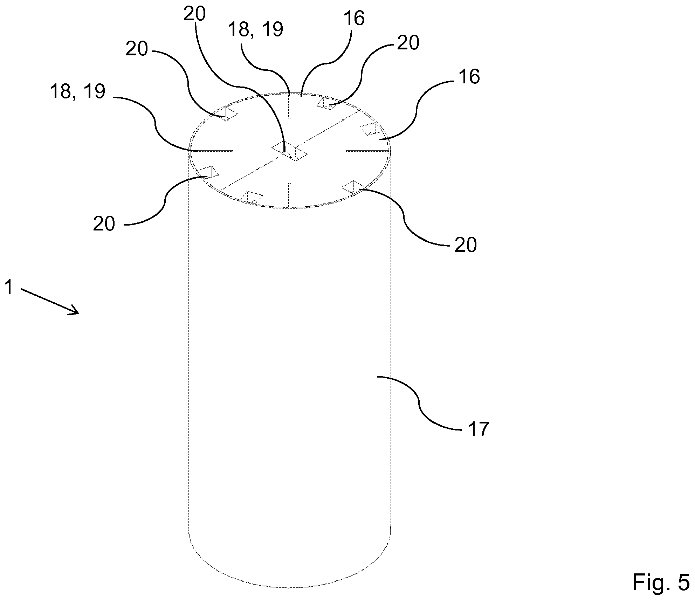

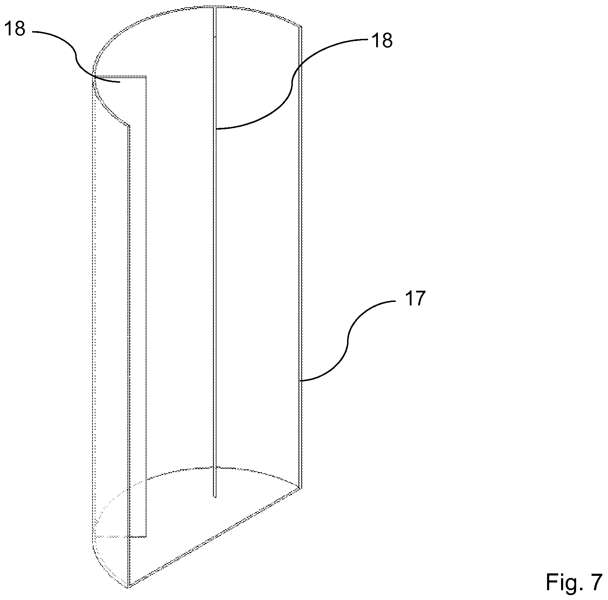

Die Figuren 5 bis 7 zeigen den Kolben 1 einer erfindungsgemäßen Vorrichtung in verschiedenen Ansichten. Dabei ist deutlich zu erkennen, dass der Kolben 1 aus mehreren, übereinander bzw. nebeneinander angeordneten Segmenten 16 aufgebaut ist, die innerhalb einer Aufnahmeeinheit 17 angeordnet sind. Die Segmente 16 sind dabei halbkreisförmig ausgebildet, so dass jeweils zwei Segmente 16 innerhalb der Aufnahmeeinrichtung 17 nebeneinander angeordnet sind und einen Kreis bilden. In besonders vorteilhafter Weise können die Aufnahmeeinheit 17 und der Zylinder 2 aus Stahl hergestellt sein. Die Aufnahmeeinheit 17 ist als Hohlzylinder ausgebildet, wobei das untere Ende der Aufnahmeeinheit 17 geschlossen ist. Des Weiteren sind an der Aufnahmeeinheit 17 Führungselemente 18 ausgebildet, die in korrespondierende Materialausnehmungen 19 der Segmente 16 eingreifen. Die Segmente 16 sind aus einem mit Bindemittel versetzten Abfallstoff, vorzugsweise aus Stahlschlacke, hergestellt.

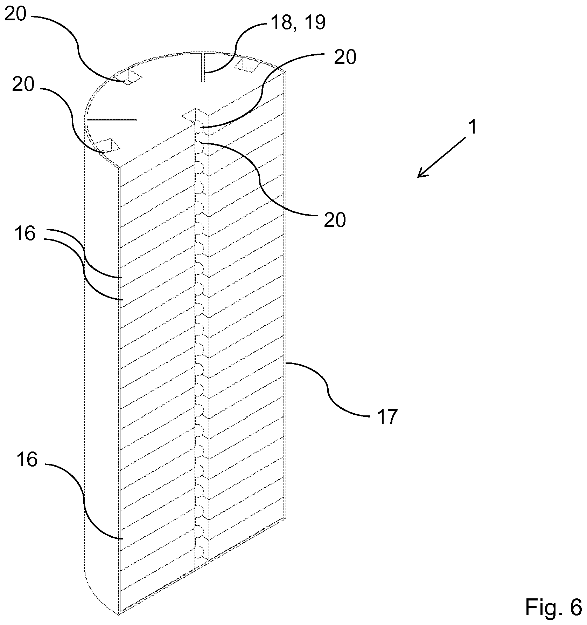

Insbesondere aus den Figuren 5 und 6 geht deutlich hervor, dass die Segmente 16 insgesamt vier Kopplungsmittel 20 für eine Abhebeeinrichtung, bspw. einen Kran, aufweisen. Die Kopplungsmittel 20 sind in dieser Ausführungsform als Kugelzapfen realisiert.

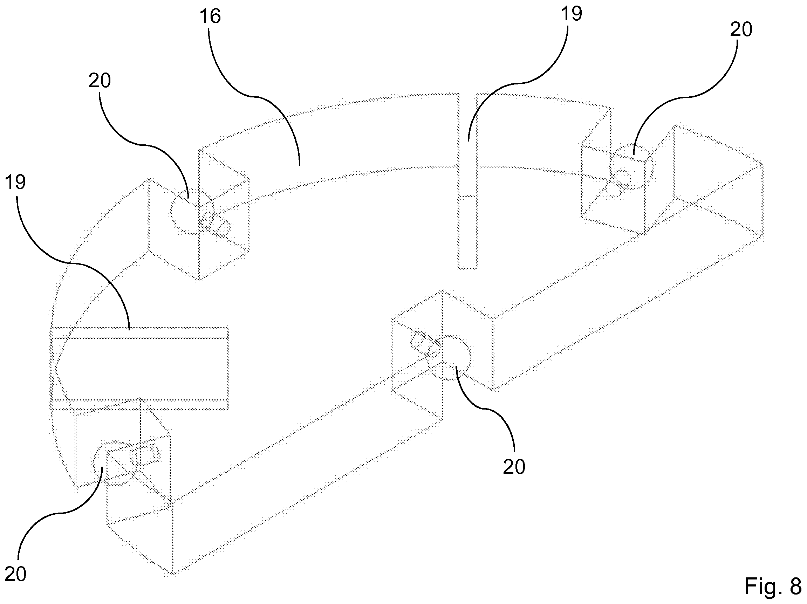

Figur 8 zeigt in einer schematischen Darstellung ein Segment 16 des Kolbens 1 einer erfindungsgemäßen Vorrichtung. Dabei ist nochmals dargestellt, dass das Segment 16 als im Wesentlichen halbkreisförmige Scheibe realisiert ist. Des Weiteren sind die Kopplungsmittel 20 sowie die Materialausnehmungen 19 gezeigt. Das Segment 16 zeichnet sich dadurch aus, dass es aus einem Material mit sehr hoher Dichte hergestellt ist, insbesondere aus mit Bindemittel versetzter Stahlschlacke.

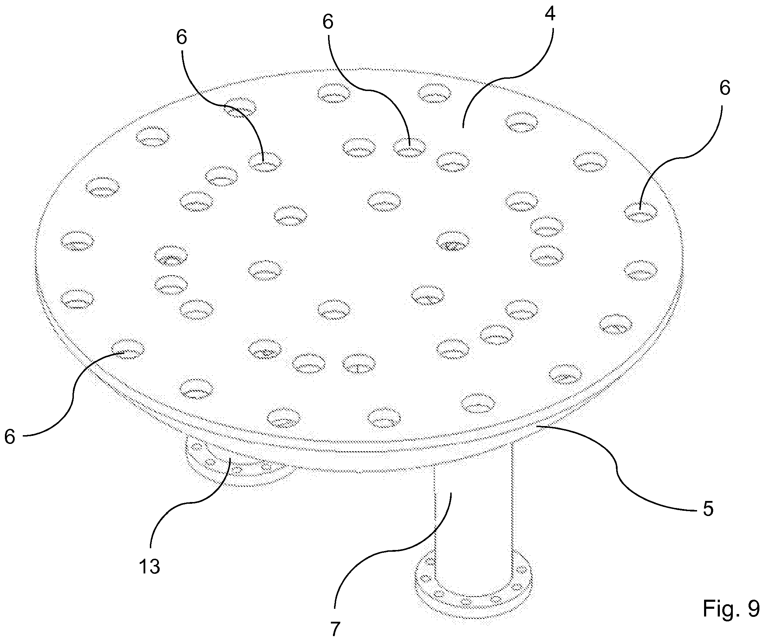

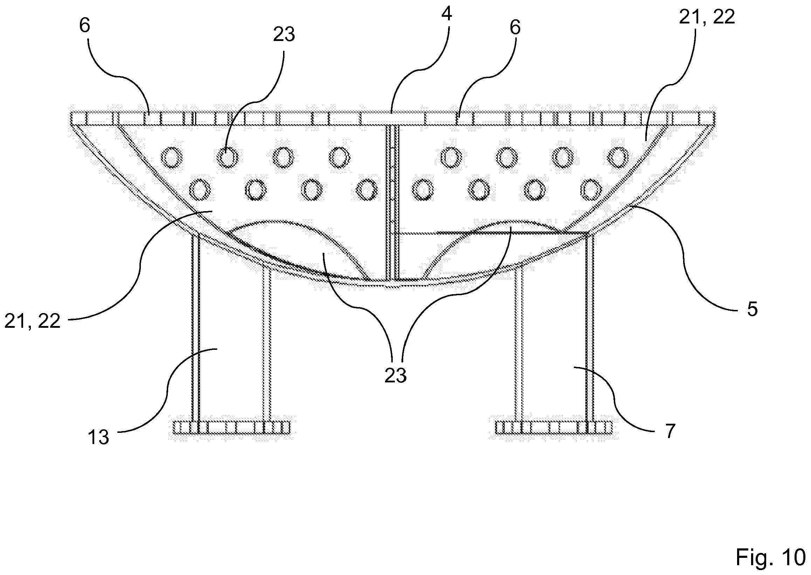

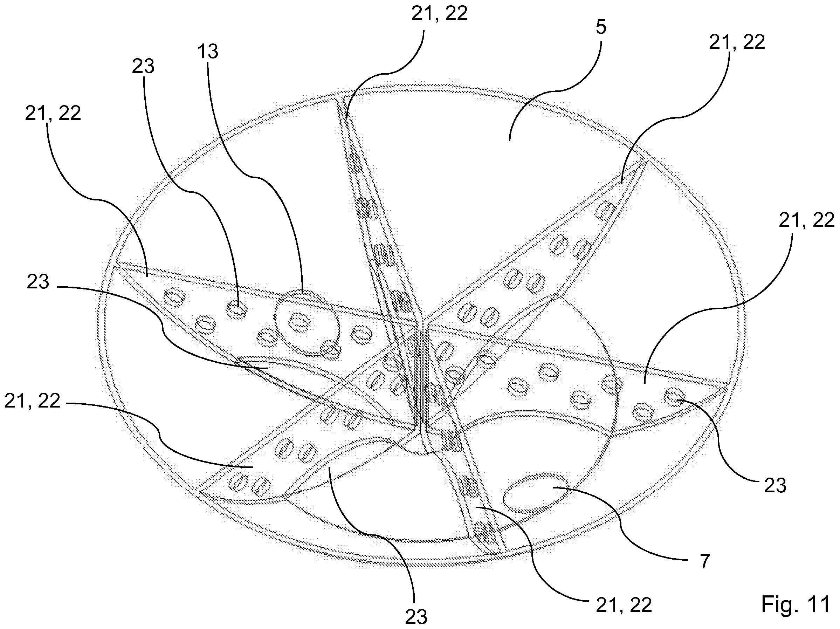

Die Figuren 9 bis 11 zeigen den Zylinderboden 4 einer erfindungsgemäßen Vorrichtung. Dabei ist deutlich zu erkennen, dass in dem Zylinderboden 4 mehrere Durchgänge 6 vorgesehen sind. In besonders bevorzugter Weise sind 70% der Fläche des Zylinderbodens 4 mit Durchgängen 6 versehen. Der Aufnahmebereich 5 ist schalenförmig ausgebildet und umfasst den Zulauf 7 und den Ablauf 13.

Zwischen dem Aufnahmebereich 5 und dem Zylinderboden 4 erstrecken sich Stützelemente 21, die als Stützwände 22 ausgebildet sind. In den Stützwänden 22 sind kreisförmige und bogenförmige Durchgänge 23 angeordnet, so dass die Flüssigkeit in die gesamte Begrenzungseinrichtung 3 eindringen kann.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Kolben
- 2: Zylinder
- 3: Erdoberfläche
- 4: Zylinderboden
- 5: Aufnahmebereich
- 6: Durchgang (Zylinderboden)
- 7: Zulauf
- 8: erste Leitung
- 9: Pumpeinrichtung
- 10: Reservoir
- 11: Wandlereinrichtung
- 12: zweite Leitung
- 13: Ablauf
- 14: Betonummantelung
- 15: Platte
- 16: Segment
- 17: Aufnahmeeinheit
- 18: Führungselement
- 19: Materialausnehmung
- 20: Kopplungsmittel
- 21: Stützelement
- 22: Stützwand
- 23: Durchgang (Stützelement)

## Patentansprüche

1. Zylinder-Kolben-Anordnung für eine Vorrichtung zum Speichern von Energie, mit einem im Wesentlichen vertikal angeordneten Zylinder (2) und einem eine zu hebende Masse darstellenden Kolben (1),
**dadurch gekennzeichnet, dass** unterhalb eines Zylinderbodens (4) ein schalenförmiger Aufnahmebereich (5) für eine Flüssigkeit ausgebildet ist und dass der Zylinderboden (4) mehrere Durchgänge (6) aufweist, so dass Flüssigkeit von dem Aufnahmebereich (5) in den Zylinder (2) unterhalb des Kolbens (1) förderbar ist, um die potentielle Energie der Kolbenmasse durch ein Anheben des Kolben (1) zu erhöhen.

2. Zylinder-Kolben-Anordnung nach Anspruch 1, **dadurch gekennzeichnet, dass** 60 % bis 80 %, insbesondere 65 % bis 75 %, vorzugsweise 70 %, der Fläche des Zylinderbodens (4) mit Durchgängen (6) versehen ist.

3. Zylinder-Kolben-Anordnung nach Anspruch 1 oder 2, **dadurch gekennzeichnet, dass** zumindest ein sich von dem Zylinderboden (4) zu dem Aufnahmebereich (5) erstreckendes Stützelement (21) angeordnet ist.

4. Zylinder-Kolben-Anordnung nach Anspruch 3, **dadurch gekennzeichnet, dass** das Stützelement (21) als Stützwand (22) und/oder Stützstrebe realisiert ist.

5. Zylinder-Kolben-Anordnung nach Anspruch 3 oder 4, **dadurch gekennzeichnet, dass** das Stützelement (21) wenigstens einen, insbesondere kreisförmigen, ellipsenförmigen und/oder bogenförmigen, Durchgang (23) aufweist.

6. Zylinder-Kolben-Anordnung nach einem der Ansprüche 1 bis 5, **dadurch gekennzeichnet, dass** an dem Zylinderboden (4) und/oder an dem Aufnahmebereich (5) eine Heizeinrichtung, insbesondere ein Wärmetauscher, ausgebildet ist.

7. Zylinder-Kolben-Anordnung nach einem der Ansprüche 1 bis 6, **dadurch gekennzeichnet, dass** an dem Zylinderboden (4) und/oder an dem Aufnahmebereich (5) eine verschließbare Revisionsöffnung, insbesondere ein Mannloch, ausgebildet ist.

8. Zylinder-Kolben-Anordnung nach einem der Ansprüche 1 bis 7, **dadurch gekennzeichnet, dass** der Zylinderboden (4) und der Aufnahmebereich (5) aus Metall oder einer Metalllegierung, insbesondere aus Stahl, hergestellt sind.

9. Zylinder-Kolben-Anordnung nach einem der Ansprüche 1 bis 8, **dadurch gekennzeichnet, dass** an dem Aufnahmebereich (5) ein Zulauf (7) und ein Ablauf (13) ausgestaltet sind.

10. Vorrichtung zum Speichern von Energie mit einer Zylinder-Kolben-Anordnung nach einem der Ansprüche 1 bis 9, wobei von einer Pumpeinrichtung (9) Flüssigkeit in den Aufnahmebereich (5) förderbar ist, um die potentielle Energie der Kolbenmasse durch Anheben des Kolbens (1) zu erhöhen, wobei eine Wandlereinrichtung (11) angeordnet ist und wobei der Wandlereinrichtung (11) bei einem Absenken des Kolbens (1) die im Zylinder (2) befindliche Flüssigkeit zuführbar ist, um zumindest einen Teil der potentiellen Energie der Kolbenmasse in elektrische Energie umzuwandeln.

## Claims

1. Cylinder/piston arrangement for a device for storing energy, having a cylinder (2) which is arranged in a substantially vertical manner and a piston (1) which constitutes a mass which is intended to be lifted, **characterised in that** below a cylinder base (4) a bowl-like receiving region (5) for a liquid is formed, and **in that** the cylinder base (4) has a plurality of passages (6) so that liquid can be conveyed from the receiving region (5) into the cylinder (2) below the piston (1) in order to increase the potential energy of the piston mass by lifting the piston (1).

2. Cylinder/piston arrangement according to claim 1, **characterised in that** from 60% to 80%, in particular from 65% to 75%, preferably 70%, of the surface-area of the cylinder base (4) is provided with passages (6).

3. Cylinder/piston arrangement according to claim 1 or claim 2, **characterised in that** at least one support element (21) which extends from the cylinder base (4) to the receiving region (5) is arranged.

4. Cylinder/piston arrangement according to claim 3, **characterised in that** the support element (21) is produced as a support wall (22) and/or support strut.

5. Cylinder/piston arrangement according to claim 3 or claim 4, **characterised in that** the support element (21) has at least one, in particular circular, elliptical and/or curved passage (23).

6. Cylinder/piston arrangement according to any one of claims 1 to 5, **characterised in that** a heating device, in particular a heat exchanger, is formed on the cylinder base (4) and/or on the receiving region (5).

7. Cylinder/piston arrangement according to any one of claims 1 to 6, **characterised in that** a closable inspection opening, in particular a manhole, is formed on the cylinder base (4) and/or on the receiving region (5).

8. Cylinder/piston arrangement according to any one of claims 1 to 7, **characterised in that** the cylinder base (4) and the receiving region (5) are produced from metal or a metal alloy, in particular from steel.

9. Cylinder/piston arrangement according to any one of claims 1 to 8, **characterised in that** an inlet (7) and an outlet (13) are formed on the receiving region (5).

10. Device for storing energy having a cylinder/piston arrangement according to any one of claims 1 to 9, wherein liquid can be conveyed by a pump device (9) into the receiving region (5) in order to increase the potential energy of the piston mass by lifting the piston (1), wherein a transformer device (11) is arranged and wherein the liquid in the cylinder (2) can be supplied to the transformer device (11) when the piston (1) is lowered in order to convert at least a portion of the potential energy of the piston mass into electrical energy.

## Revendications

1. Disposition cylindre-piston pour un dispositif pour l'accumulation d'énergie, avec un cylindre (2) disposé globalement verticalement et un piston (1) représentant une masse à soulever,
**caractérisée en ce que**, en dessous d'un fond de cylindre (4), est réalisé une zone de logement (5) en forme de coque pour un liquide et **en ce que** le fond de cylindre (4) comprend plusieurs passages (6), de façon à ce que le liquide puisse être convoyé de la zone de logement (5) vers le cylindre (2) en dessous du piston (1), afin d'augmenter l'énergie potentielle de la masse du piston par un soulèvement du piston (1).

2. Disposition cylindre-piston selon la revendication 1, **caractérisée en ce que** 60 % à 80 %, plus particulièrement 65 % à 75 %, de préférence 70 % de la surface du fond de cylindre (4) est muni de passages (6).

3. Disposition cylindre-piston selon la revendication 1 ou 2, **caractérisée en ce qu'**au moins un élément d'appui (21) s'étendant du fond de cylindre (4) vers la zone de logement (5).

4. Disposition cylindre-piston selon la revendication 3, **caractérisée en ce que** l'élément d'appui (21) est réalisé sous la forme d'une paroi d'appui (22) et/ou d'un étai.

5. Disposition cylindre-piston selon la revendication 3 ou 4, **caractérisée en ce que** l'élément d'appui (21) comprend au moins un passage (23), plus particulièrement circulaire, de forme elliptique et/ou en forme d'arc de cercle.

6. Disposition cylindre-piston selon l'une des revendications 1 à 5, **caractérisée en ce que**, sur le fond de cylindre (4) et/ou sur la zone de logement (5), est réalisé un dispositif de chauffage, plus particulièrement un échangeur thermique.

7. Disposition cylindre-piston selon l'une des revendications 1 à 6, **caractérisée en ce que**, sur le fond de cylindre (4) et/ou sur la zone de logement (5), est réalisée une ouverture de révision, plus particulièrement un trou d'homme.

8. Disposition cylindre-piston selon l'une des revendications 1 à 7, **caractérisée en ce que** le fond de cylindre (4) et la zone de logement (5) sont constitués de métal ou d'un alliage métallique, plus particulièrement d'acier.

9. Disposition cylindre-piston selon l'une des revendications 1 à 8, **caractérisée en ce que**, sur la zone de logement (5), sont réalisés une admission (7) et une évacuation (13).

10. Dispositif d'accumulation d'énergie avec une disposition cylindre-piston selon l'une des revendications 1 à 9, un liquide pouvant être convoyé par un dispositif de pompage (9) dans la zone de logement (5), afin d'augmenter l'énergie potentielle de la masse du piston par le soulèvement du piston (1), un dispositif convertisseur (11) étant disposé et le liquide se trouvant dans le cylindre (2) pouvant être introduit dans le dispositif convertisseur (11) lors d'un abaissement du piston (1), afin de convertir au moins une partie de l'énergie potentielle de la masse du piston en énergie électrique.
